# FASCICULE DE BREVET EUROPEEN

(11) **EP 2 542 711 B1**
(45) Date de publication et mention de la délivrance du brevet: **08.01.2014**
(21) Numéro de dépôt: 11712966.8
(22) Date de dépôt: 04.03.2011
(51) Int. Cl.: D01D 5/06, D01F 9/00, D01F 9/04

(54) **PROCEDE D'OBTENTION D'UN ELEMENT LONGIFORME DE POLYSACCHARIDE, NOTAMMENT UN FIL DE CHITOSANE**
VERFAHREN ZUR GEWINNUNG EINES LÄNGLICHEN POLYSACCHARIDELEMENTS, IM BESONDEREN EINES CHITOSANFADENS
METHOD FOR OBTAINING AN ELONGATE POLYSACCHARIDE ELEMENT, IN PARTICULAR A CHITOSAN THREAD

(30) Priorité: 05.03.2010 FR 1051640
(43) Date de publication de la demande: 09.01.2013
(73) Titulaire: Laboratoire Tetra Medical, 07100 Annonay (FR); Centre National de la Recherche Scientifique, 75794 Paris Cedex 16 (FR); Université Claude Bernard Lyon I, 69622 Villeurbanne Cedex (FR)
(72) Inventeur: DAVID, Laurent, F-69004 Lyon (FR); MONTEMBAULT, Alexandra, F-42000 Saint Etienne (FR); DESORME, Mylène, F-42800 Saint Martin La Plaine (FR)
(74) Mandataire: Sarlin, Laure V.
(86) Numéro de dépôt international: PCT/FR2011/050453
(87) Numéro de publication internationale: WO 2011/107719

(56) Documents cités:
- WO-A1-97/30093
- JP-A- 4 119 121
- EAST G C ET AL: "WET SPINNING OF CHITOSAN AND THE ACETYLATION OF CHITOSAN FIBERS", JOURNAL OF APPLIED POLYMER SCIENCE, JOHN WILEY AND SONS INC. NEW YORK, US LNKD- DOI:10.1002/APP.1993.070501013, vol. 50, no. 10, 10 décembre 1993 (1993-12-10), pages 1773-1779, XP000464421, ISSN: 0021-8995
- NOTIN L ET AL: "Morphology and mechanical properties of chitosan fibers obtained by gel-spinning: Influence of the dry-jet-stretching step and ageing", ACTA BIOMATERIALIA, ELSEVIER, AMSTERDAM, NL LNKD- DOI:10.1016/J.ACTBIO.2006.03.003, vol. 2, no. 4, 1 juillet 2006 (2006-07-01) , pages 387-402, XP025150238, ISSN: 1742-7061 [extrait le 2006-07-01]

## Description

La présente invention concerne l'obtention, par extrusion, d'un élément longiforme de polysaccharide ; elle concerne notamment le filage du chitosane.

Le chitosane est un dérivé désacétylé de la chitine. Il s'agit d'un copolymère linéaire composé de la distribution le plus souvent statistique de D-glucosamine (résidu ou unité désacétylée) et de N-acétyl-D-glucosamine (résidu ou unité acétylée) reliés ensemble par des liaisons glycosidiques β,(1->4). Le chitosane est biodégradable et biocompatible. De façon générale, il est également bioactif, notamment hypocholestérolémiant, bactériostatique, fongistatique et régénérateur de tissus vivants. Du fait de ces propriétés, il trouve naturellement son intérêt dans les domaines de la cosmétique, de la diététique, de la pharmacie et des biomatériaux.

La technique la plus répandue pour le filage du chitosane est du type filage au mouillé (Georges C. East et Yimin Qin, Wet spinning of chitosan and the acetylation of chitosan fibers, Journal of Applied Polymer Science, 1993, 50 (10), 1773-9) ; elle consiste à réaliser un collodion de chitosane en mettant du chitosane en solution aqueuse en milieu acide dilué, notamment acide acétique, à extruder ledit collodion à travers une filière dans un bain de coagulation alcalin, généralement une solution de soude, de potasse ou d'ammoniaque, à laver, sécher, puis bobiner le filament coagulé obtenu. L'acide dans le collodion est en quantité stoechiométrique par rapport aux fonctions amine du chitosane de sorte que l'on obtient la dissolution du chitosane, grâce à la protonation des fonctions amine de l'unité glucosamine. Lors de l'extrusion du collodion dans le bain alcalin, notamment de soude, de potasse ou d'une solution d'ammoniaque, la fonction amine est déprotonée, ce qui provoque la précipitation du chitosane et la formation d'un sel, notamment d'acétate de sodium, de potassium ou d'ammonium, sel qui est ensuite éliminé lors de l'étape de lavage.

Le document JP-4119121 décrit un procédé de préparation de fibres de polysaccharides naturelles solubles dans l'eau qui peuvent être obtenues par filage d'une solution aqueuse composée dudit polysaccharide, d'un polyalcool et d'eau, par coagulation dans un bain contenant ledit polyalcool et de l'eau, suivie d'un séchage.

Dans le document EP 1.670.418, est proposée une technique de filage qui diffère de la précédente en ce que l'agent coagulant n'est plus une solution alcaline mais un gaz alcalin, en particulier l'ammoniac. Cette technique de filage à sec permet de supprimer tous les milieux aqueux en sortie de filière, y compris les bains de lavage. En effet, étant donné que le sel d'acétate d'ammonium formé à l'intérieur des filaments lors de la coagulation en présence du gaz ammoniac est facilement hydrolysé en acide acétique et ammoniac, son élimination totale ou partielle a été possible par la mise en place d'un système de séchage à air chaud humide permettant de remplacer les étapes de lavage/séchage du procédé classique de filage par voie humide. Il est à noter qu'il peut d'ailleurs être intéressant de maintenir une certaine présence de sels résiduels pour certaines applications, du fait que cette présence contrôle les propriétés de gonflement des fibres en milieu fortement hydraté.

La présente invention a pour objet un nouveau procédé d'obtention d'un élément longiforme de polysaccharide qui diffère des deux techniques mentionnées ci-dessus et qui permet d'obtenir une fraction importante d'allomorphe anhydre dans le filament obtenu, laquelle fraction est supérieure ou égale à 40%, de préférence supérieure ou égale à 50%. De manière connue, ce procédé comporte une opération d'extrusion d'une solution extrudable dudit polysaccharide à travers une filière d'extrusion et une opération de coagulation par neutralisation de la solution extrudée.

On comprend, dans le cadre de la présente invention, que lorsque l'allomorphe anhydre est obtenu de façon majoritaire dans le fil, sa fraction est supérieure ou égale à 40 %, de préférence supérieure ou égale à 50%.

De manière caractéristique, la solution extrudable est une solution hydro-alcoolique contenant un poly/alcool, et le procédé comporte au moins une opération d'élimination de l'alcool contenu dans l'élément extrudé et coagulé pour obtenir l'élément longiforme de polysaccharide et la proportion d'eau et de polyalcool dans la solution extrudable est déterminée en sorte d'obtenir dans l'élément longiforme un polysaccharide dont la structure cristalline est majoritairement sous la forme de l'allomorphe anhydre.

De préférence, la solution hydro-alcoolique comprend un ratio eau / polyalcool en poids dont la proportion en polyalcool est majoritaire par rapport à l'eau.

L'alcool, contenu dans la solution extrudable hydro-alcoolique est obligatoirement un polyalcool, notamment un diol ou un triol. Il ne peut pas s'agir d'un mono-alcool, tel que le méthanol, l'éthanol ou le propanol. En effet, il importe que l'alcool retenu ne précipite pas la solution, ce que risque de faire un mono-alcool, mais au contraire maintienne le collodion à l'état de solution et que celle-ci reste homogène. Il est de préférence choisi dans le groupe : 1,2- et 1,3-propane- diol, 1,2-, 1,3- et 1,4-butane-diol, 1,2,3-propane-triol (glycérol).

De manière inattendue, l'élément longiforme obtenu à partir de la solution hydro-alcoolique de polysaccharide de la présente invention, formée à partir d'un polyalcool, présente une structure cristalline particulière, structure qui se caractérise par une prédominance de l'allomorphe anhydre dudit polysaccharide, alors qu'avec les autres techniques connues c'est l'allomorphe hydraté qui est prédominant.

On peut tenter d'expliquer cette prédominance de l'allomorphe anhydre en supposant que la présence du polyalcool dans la solution extrudable induirait, lors de la neutralisation, des conditions particulièrement hydrophobes conduisant à une coagulation progressive de macromolécules partiellement déshydratées. Le polyalcool jouerait le rôle d'agent hydrophobe qui repousserait les molécules d'eau lors de la formation du gel. Au contraire dans les techniques connues, la solution extrudable serait exempte d'un tel agent hydrophobe de sorte que la coagulation interviendrait en présence de macromolécules fortement hydratées. L'étape de neutralisation selon l'invention permet de favoriser les interactions entre les macromolécules et le développement de la cristallinité. Le polyalcool selon l'invention a une fonction d'agent déshydratant et d'agent de pontage entre les chaînes dans la phase amorphe.

Une explication supplémentaire, non exhaustive, serait qu'à une échelle plus grande que celle des cristaux polymères (quelques nm à quelques centaines de nm), la présence du polyalcool influence la formation de nanoparticules ou d'agrégats de quelques centaines de nanomètres de cristaux de polymères, dont la percolation conduit au gel macroscopique. La formation du gel est un phénomène de séparation de phase. La présence du polyalcool oriente la séparation vers un mécanisme de décomposition spinodale, alors que des conditions plus hydrophiles conduisent à un mécanisme de nucléation et croissance. Ainsi, la taille moyenne des agrégats issus de la séparation de phase par décomposition spinodale, en présence du polyalcool, est nettement plus petite que dans des conditions exclusivement hydrophiles, telles que dans les techniques connues. Les agrégats restent plus enchevêtrés lorsqu'ils sont formés par décomposition spinodale.

Ceci conduit avantageusement, après neutralisation d'un collodion hydroalcoolique, à un gel semi-cristallin ayant des propriétés mécaniques améliorées, facilitant les opérations d'étirage ultérieures, lesquelles intrinsèquement favorisent encore la cristallisation. Par ailleurs, selon les temps de lavage appliqués, la présence d'alcool résiduel, qui joue le rôle d'agent pontant entre les chaînes, contribue aussi à augmenter les propriétés mécaniques.

De plus, dans le procédé de la présente invention, la formation de l'allomorphe anhydre ne se fait pas au détriment de la masse molaire du polysaccharide, contrairement à ce qui se passe en mettant en oeuvre les techniques connues, notamment la technique du recuit à une température de l'ordre de 240°C, comme mentionné par Ogawa, K., effect of heating and aqueous suspension of chitosan on the crystallinity and polymorphs. Agricultural and biological chemistry, 1991. Vol 55 (N° 9) P.2375-2379.

Cette dernière technique permet d'obtenir certes la formation d'un allomorphe anhydre mais ceci au détriment de la masse molaire finale et donc des propriétés mécaniques.

Ainsi la masse molaire moyenne en masse du polysaccharide de l'élément longiforme obtenu est sensiblement maintenue proche de sa valeur initiale dans le polysaccharide ayant servi à la préparation de la solution extrudable.

De préférence, le polysaccharide mis en oeuvre pour préparer la solution extrudable ayant une masse molaire moyenne en masse Mw0, le polysaccharide dans l'élément longiforme obtenu a une masse molaire moyenne en masse Mw1 qui est comprise entre Mw0 et 0,7 Mw0, de préférence comprise entre Mw0 et 0,8 Mw0.

La masse molaire moyenne en masse moyenne initiale du chitosane dans la solution extrudable utilisée dans le cadre de la présente invention est, avantageusement, comprise entre 150 000 et 650 000 g/mol, de préférence entre 450 000 et 650 000 g/mol.

La viscosité apparente de la solution hydro-alcoolique selon l'invention est, en général, comprise entre 250 Pa.s et 2500 Pa.s.

Par exemple, s'agissant d'un fil de chitosane obtenu par le procédé de la présente invention, la masse molaire moyenne en masse du chitosane dans ledit fil est supérieure à 350.000 g/mole. Bien sûr, pour obtenir cette valeur, il convient de partir d'un chitosane initial, pour former la solution extrudable, ayant une masse molaire moyenne en masse supérieure à 350.000 g/mole, notamment de l'ordre de 400.000 g/mole ou plus.

Les masses molaires moyennes en masse indiquées dans le présent texte ont été déterminées par la technique de mesure décrite dans la publication suivante : « A. MONTEMBAULT, C. VITON, A. DOMARD - Physico-chemical studies of the gelation of chitosan in a hydroalcoholic medium Biomaterials, 26(8), 933-943, 2005. »

Cette double caractéristique, d'une fraction en allomorphe anhydre, notamment de chitosane, supérieure ou égale à 40%, de préférence supérieure ou égale à 50%, correspondant à la structure cristalline, et d'une masse molaire sensiblement préservée, fait que l'élément longiforme de l'invention possède des propriétés mécaniques élevées, notamment en terme de contrainte à la rupture, comparativement à un élément du même polysaccharide de départ, obtenu par une autre technique, qui a une structure cristalline majoritairement allomorphe hydraté et dont les chaînes macromoléculaires ont été dégradées.

Il est à noter que la proportion de polyalcool par rapport à l'eau dans la solution extrudable hydro-alcoolique, permettant d'obtenir majoritairement l'allomorphe anhydre dans la structure cristalline de l'élément longiforme obtenue est fonction des conditions opératoires, notamment le choix du polysaccharide et sa concentration dans la solution, le choix du polyalcool, les conditions de l'éventuel étirage.

De préférence, la solution hydro-alcoolique contient, en masse, de 0,8 à 3,5 % de polysaccharide, notamment de chitosane, en particulier pour un chitosane ayant une masse molaire moyenne en masse Mw0 supérieure ou égale à 400 000 g/mol, et une proportion eau/polyalcool dans laquelle la proportion en poids en eau est inférieure ou égale à 50% et la proportion en poids en polyalcool est supérieure ou égale à 50%, de préférence la proportion en poids en polyalcool est supérieure ou égale à 55%.

Il a été remarqué qu'en augmentant la proportion de polyalcool dans la solution extrudable, on obtient corrélativement une augmentation de la fraction en allomorphe anhydre dans l'élément longiforme obtenu, qui peut aller jusqu'à 100%.

De préférence, l'opération de coagulation par neutralisation est suivie d'une opération de lavage en sorte d'éliminer les sels formés et éventuellement le polyalcool résiduel.

Le polyalcool contenu dans l'élément extrudé est au moins en partie éliminé au cours de l'opération de coagulation par neutralisation, lorsque celle-ci intervient par passage dans un bain contenant une solution, basique ou acide selon le polysaccharide utilisé, et également au cours de l'opération de lavage.

Selon une variante de réalisation, le procédé comprend également une étape de séchage de l'élément longiforme de polysaccharide.

Laquelle étape de séchage est effectuée sous un air chaud sec lorsque l'opération de coagulation est effectuée dans une solution de neutralisation acide ou basique.

Selon un mode de réalisation, la solution extrudable est une solution acide et l'opération de coagulation intervient par passage de la solution extrudée dans un bain de coagulation consistant en un bain alcalin de neutralisation, par exemple dans de la soude ou de l'ammoniaque 1 mol/l (1M), pour obtenir l'élément coagulé, lequel est ensuite soumis à une opération de lavage, puis de préférence à une opération de séchage, en particulier sous un air chaud et sec. L'élimination du polyalcool intervient lors du passage dans le bain de coagulation et dans le bain de lavage.

Selon un mode de réalisation, la solution extrudable est une solution acide et l'opération de coagulation intervient par passage de la solution extrudée dans un gaz alcalin de neutralisation pour obtenir l'élément coagulé. L'élimination du polyalcool et des sels résiduels est effectuée lors de l'opération de lavage et de séchage, de préférence sous un flux d'air chaud et sec.

Le procédé de la présente invention s'applique au chitosane et à de nombreux autres polysaccharides, principalement ceux qui sont solubles dans l'eau et filmogènes et notamment qui présentent des liaisons glycosidiques β,(1->4). On peut citer les dérivés de cellulose, l'acide hyaluronique, des hémicelluloses, des alginates et des pectines.

S'agissant plus particulièrement du chitosane, de préférence la solution hydroalcoolique extrudable est obtenue en partant de chitosane en solution aqueuse d'acide, notamment en milieu acide acétique, et en ajoutant le polyalcool retenu. Le bain de coagulation par neutralisation est, de préférence, une solution d'ammoniaque ou de soude ; cependant il pourrait aussi s'agir d'une neutralisation par un gaz alcalin, notamment par l'ammoniac gazeux comme dans le document EP 1.670.418.

Pour l'obtention d'un élément longiforme d'acide hyaluronique ou d'alginate, la solution extrudable est obtenue en partant du hyaluronane ou de l'alginate en solution aqueuse à pH neutre et l'opération de coagulation se fait dans un bain neutralisant acide.

L'élément longiforme obtenu par le procédé de l'invention est préférentiellement un fil, l'extrusion étant réalisée à travers une filière de filage, soit une filière unique pour former un filament continu, soit une filière multiple pour former un fil multifilamentaire. Dans ce cas, le procédé comporte une opération ultime de bobinage du filament ou du fil multifilamentaire obtenu.

Cependant, le procédé n'est pas limité au filage, l'élément longiforme pouvant se présenter comme un profilé de section quelconque, fonction de la configuration de la filière d'extrusion. Il peut s'agir notamment d'un film ou d'une plaque, avec une filière de section rectangulaire ou encore d'un tube avec une filière de section circulaire ou annulaire.

S'agissant plus particulièrement du filage d'un fil de polysaccharide, le procédé comporte au moins une opération d'étirage pendant et/ou après la coagulation. De préférence, cet étirage intervient au moins dès la sortie de la filière d'extrusion.

La présente invention sera mieux comprise à la lecture de la description ci-après d'un exemple de fabrication d'un fil de chitosane illustré, en référence aux figures annexées.
La **figure 1** est une représentation schématique de l'installation de filage.
La **figure 2** est un graphique représentant l'influence des conditions de neutralisation sur la formation d'allomorphe anhydre par rapport à la formation d'allomorphe hydraté.
Les **figures 3A** et **3B** sont des graphiques représentant l'influence de la proportion du polyalcool par rapport à l'eau dans le solvant eau/polyalcool constituant le collodion sur la formation d'allomorphe anhydre par rapport à la formation d'allomorphe hydraté.
La **figure 4** est un graphique représentant l'influence de la concentration de chitosane sur la formation d'allomorphe anhydre par rapport à la formation d'allomorphe hydraté pour différentes conditions de neutralisation.
La **figure 5** est une photographie, prise au microscope électronique, d'un noeud formé sur un fil de chitosane de l'invention.

L'installation **1** comporte, successivement, une extrudeuse **2** et sa filière d'extrusion **3**, une unité de coagulation **4**, une unité de lavage **5**, un système d'étirage **6**, une unité de séchage **7** et une unité de bobinage **8**.

Cette installation 1 peut permettre la fabrication d'un fil, soit un filament continu, soit un fil multifilamentaire selon que la filière d'extrusion **3** est une filière simple à trou unique ou comportant une pluralité de trous ; elle peut également permettre la fabrication d'un film, enroulable sous forme de bobine, avec une filière **3** ayant une section rectangulaire de faible largeur.

S'il s'agit d'extruder une plaque, ou tout autre forme (fibre creuse, tube, profilés divers) non enroulable sur elle-même, l'installation devra comporter des moyens complémentaires de coupe et de manipulation séquencés pour la fabrication de tronçons unitaires de ladite plaque.

L'exemple détaillé qui va être décrit ci-après est relatif à la fabrication d'un fil de chitosane ; cet exemple n'est pas limitatif de la présente invention, celle-ci pouvant concerner la fabrication de tout élément longiforme de polysaccharide susceptible d'être solubilisé sous la forme d'une solution extrudable hydroalcoolique et qui, de plus, présente des propriétés filmogènes. On peut citer en particulier les éthers de cellulose tels que la carboxymethylcellulose(CMC), l'hydroxypropylcellulose (HPC), la méthylcellulose (MC), la méthyléthylcellulose (MEC), l'hydroxyméthyl cellulose (HPMC), les esters de cellulose et principalement l'acétate de cellulose, l'acide hyaluronique, certaines hémicelluloses, les alginates, certaines pectines notamment l'homogalacturomanane.

La solution hydroalcoolique de chitosane est réalisée en dissolvant le chitosane dans une solution aqueuse d'acide puis en ajoutant dans cette solution un polyalcool. La solution aqueuse d'acide, de préférence acide acétique, est obtenue en ajoutant une quantité d'acide qui est stoechiométrique par rapport aux fonctions amine libre du chitosane dissous. Le polyalcool choisi pour obtenir la solution hydroalcoolique de chitosane est par exemple le 1,2-propane-diol.

Avant d'être extrudée, la solution hydroalcoolique est dégazée pour éliminer les bulles de gaz pouvant être à l'origine de défauts dans le fil obtenu.

La solution hydroalcoolique doit présenter une viscosité suffisante pour permettre l'extrusion mais pas trop importante pour ne pas avoir des temps de dégazage trop longs. Pour cela, on utilise une solution ayant une concentration de 0,8% à 3,5% en poids de chitosane, ayant de préférence une masse molaire moyenne en masse Mw0 > 400.000 g/mole, dans un mélange eau/polyalcool dans lequel la proportion en poids en eau est inférieure ou égale à 50%, et la proportion en poids en polyalcool est supérieure ou égale à 50%, de préférence la proportion en poids en polyalcool est de 55%.

Pour obtenir la viscosité adéquate avec de faibles concentrations en chitosane, il est préférable d'utiliser un chitosane de masse molaire élevée, par exemple dans la fourchette de masses molaires moyennes Mw0 de 150 000 à 650 000 g/mol. La solution hydroalcoolique de chitosane a une viscosité apparente comprise entre 250 Pa.s et 2500 Pa.s.

Par ailleurs, les meilleures propriétés mécaniques pour le fil sont obtenues en mettant en oeuvre un chitosane dont le degré d'acétylation est faible, notamment inférieur à 40%, de préférence inférieur à 30%. Le degré d'acétylation (DA) est le pourcentage d'unités acétylées par rapport au nombre d'unités totales présentes sur la chaîne de chitosane, soit leur fraction molaire multipliée par 100. Il peut être déterminé par spectrométrie infrarouge à transformée de Fourier ou préférentiellement par spectrométrie RMN du proton ¹H. La remarque ci-dessus ne se limite pas aux formes acétylées du chitosane ; elle concerne aussi toutes autres formes acylées de la fonction amine primaire notamment éthyl-, propyl-, ou butyl-chitosane de faible taux d'acylation, par exemple inférieur à 40%.

Dans un exemple précis de réalisation, la solution hydroalcoolique extrudable de chitosane a été obtenue en partant, comme matière première, d'un chitosane (Mahtani Chitosan), ayant un degré d'acétylation compris entre 1 et 3%, une masse molaire moyenne en masse élevée comprise entre 450.000 et 600.000 g/mol.

La solution hydroalcoolique, ayant une concentration initiale, avant dégazage, de 2,4% en poids de chitosane, une proportion eau/polyalcool de 40/60 % en masse, et une viscosité apparente, après dégazage, proche de 1500 Pa.s a été extrudée à travers une filière tubulaire à trou unique dont la section intérieure avait un diamètre de 0,8 mm. L'extrusion a été réalisée avec un débit compris entre 3 et 20 ml/h.

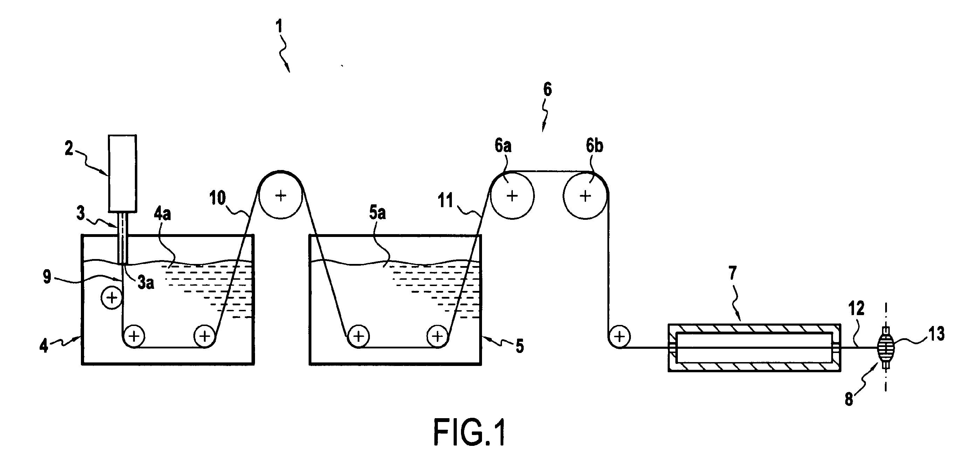

Comme illustré sur la **figure 1**, la solution extrudée **9**, sortant de l'extrémité aval **3a** de la filière d'extrusion **3**, pénètre dans l'unité de coagulation **4** consistant en un bac rempli d'une solution aqueuse alcaline **4a**, notamment une solution d'ammoniaque, de soude ou de potasse. La filière d'extrusion **3** est de préférence immergée dans la solution alcaline **4a** ou disposée à proximité de la surface de la solution alcaline **4a**, tel que représentée à la **figure 1**, afin que la solution extrudée sortant sous forme de jet liquide ne soit pas rompue par des collodions dès l'application d'un étirage en sortie de la filière d'extrusion **3**.

Le passage de la solution extrudée **9** dans cette solution alcaline provoque la coagulation du chitosane, conduisant à la formation d'un fil extrudé et coagulé **10** et à l'élimination au moins partielle du polyalcool contenue dans la solution extrudée **9**. Ce fil **10**, en sortie de l'unité de coagulation **4**, passe ensuite dans l'unité de lavage **5** consistant en un bac rempli d'eau **5a**. Le but de ce lavage est d'éliminer l'excès de base et les sels formés, par exemple l'acétate d'ammonium, de sodium ou de potassium, selon la composition de la solution alcaline, éventuellement le chlorure de sodium dans le cas où la solution hydroalcoolique extrudable contient de l'acide chlorhydrique et la neutralisation une solution de soude. Au cours de cette opération de lavage, les traces éventuelles de polyalcool résiduel sont définitivement éliminées.

Le fil extrudé coagulé et lavé **11**, obtenu en sortie d'unité de lavage **5**, passe ensuite dans l'unité de séchage **7** consistant en une enceinte qui est traversée par un flux d'air chaud à une température de l'ordre de 100 à 110°C. Le fil de chitosane **12** sortant du séchage est enroulé sous forme de bobine **13** dans l'unité finale **8** de bobinage.

Il est possible de prévoir une ou plusieurs opérations de lavage supplémentaires après séchage du fil **12** afin d'éliminer le polyalcool, l'excès de base et des sels formés si le temps de lavage dans l'unité de lavage **5** sur l'installation **1** n'est pas suffisant.

L'installation **1** peut comporter également des systèmes d'étirage : un disposé en sortie de filière après évaporation de l'eau, un autre, représenté et annoté **6** sur la **figure 1**, entre l'unité de lavage **5** et l'unité de séchage **7**. Ces systèmes d'étirage sont composés de deux cylindres, par exemple **6a** et **6b**, autour desquels le fil respectivement coagulé et lavé **11** forme plusieurs spires, l'entraînement du cylindre aval **6b** étant réalisé à une vitesse linéaire supérieure à celle du cylindre amont **6a**. Le but de cet étirage est d'améliorer les caractéristiques mécaniques du fil **12**. Plus généralement, cet étirage peut être mis en oeuvre pendant et/ou après l'opération de coagulation, avant, pendant et/ou après l'opération de lavage, voire éventuellement pendant l'opération de séchage, à l'aide d'un seul ou de plusieurs systèmes d'étirage.

Le polyalcool qui était contenu dans la solution extrudée a été éliminé lors des opérations de coagulation et de lavage, de sorte que le fil **12** obtenu ne comporte sensiblement plus de polyalcool, ce qui influe notablement sur sa structure.

On sait que, comme de nombreux polymères naturels, le chitosane est un polymère semi-cristallin qui présente plusieurs formes cristallines dont les deux principales correspondent aux allomorphes hydraté et anhydre (Okuyama, K, et al structural diversity of chitosan and its complexes. Carbohydrate Polymers, 2000.41(3) :p.237-247). La forme hydratée est la forme polymorphe la plus courante du chitosane. La maille cristalline est dans ce cas stabilisée par la présence de molécules d'eau permettant la formation de ponts hydrogène. Il s'agit d'au minimum trois molécules d'eau pour huit unités glucosamine dans la maille. La forme anhydre du chitosane est en revanche moins abondante en raison de la grande affinité du polymère avec l'eau. Elle peut cependant être obtenue grâce à un recuit à une température de l'ordre de 240°C, comme mentionné par Ogawa, K., effect of heating and aqueous suspension of chitosan on the crystallinity and polymorphs. Agricultural and biological chemistry, 1991. Vol 55 (N° 9) P.2375-2379.

A la différence de l'allomorphe hydraté, aucune molécule d'eau n'est présente au sein de la maille cristalline anhydre. La maille est alors plus compacte et les propriétés mécaniques sensiblement améliorées. De plus, cette forme se réhydrate moins facilement au simple contact de l'eau et conserve de bonnes propriétés mécaniques même en milieu aqueux.

Une étude morphologique par analyse de diffraction des rayons X (rayonnement synchrotron) a permis de mettre en évidence la génération de la forme cristalline anhydre, de façon majoritaire par rapport à la forme cristalline hydratée, lors de la formation du fil de chitosane selon le procédé de la présente invention, tout particulièrement mais non exclusivement en faisant varier la proportion de polyalcool dans la solution hydroalcoolique extrudable.

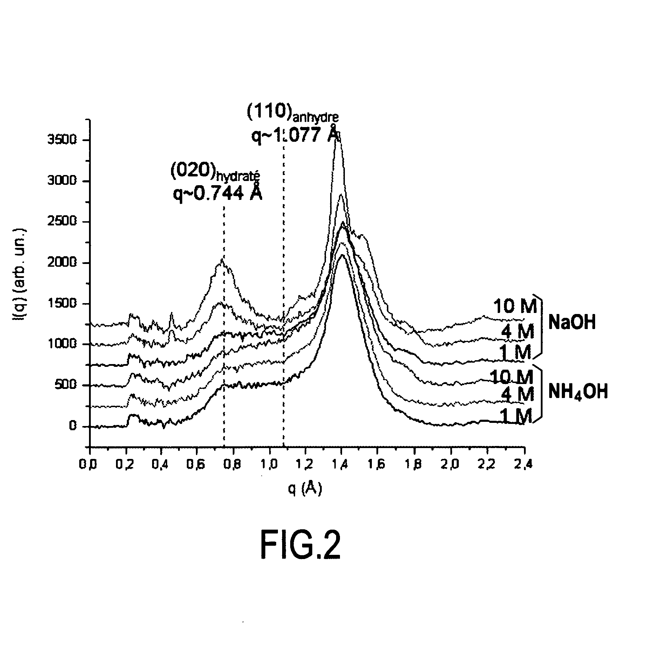

Les résultats de cette étude sont en partie représentés aux figures 2 à 5. Ces résultats ont été obtenus par la mise en oeuvre du procédé illustré à la **figure 1**, à partir d'un collodion à 2,4% de chitosane en poids dans un mélange eau / 1,2-propanediol 40/60 (%w/w) dans un bain alcalin **4a**.

La **figure 2** illustre l'influence de la nature de la base, dans cet exemple précis, ammoniaque ou soude, et de sa concentration dans le bain alcalin **4a** sur la composition en allomorphes dans le fil de chitosane **12**. Les résultats diffèrent selon la nature de la base. En effet, lorsque la base est l'ammoniaque, peu importe sa concentration dans le bain alcalin **4a**, on obtient la formation majoritaire d'allomorphes anhydres. Lorsque la neutralisation est effectuée dans de la soude, l'effet de la concentration de cette base a par contre une influence sur la fraction d'allomorphes anhydres obtenue. Ainsi, lorsque la concentration en soude est de 1 mol/litre (1M), la forme majoritaire est l'allomorphe anhydre alors que lorsque la concentration en soude est supérieure 4M, la forme majoritaire est l'allomorphe hydraté.

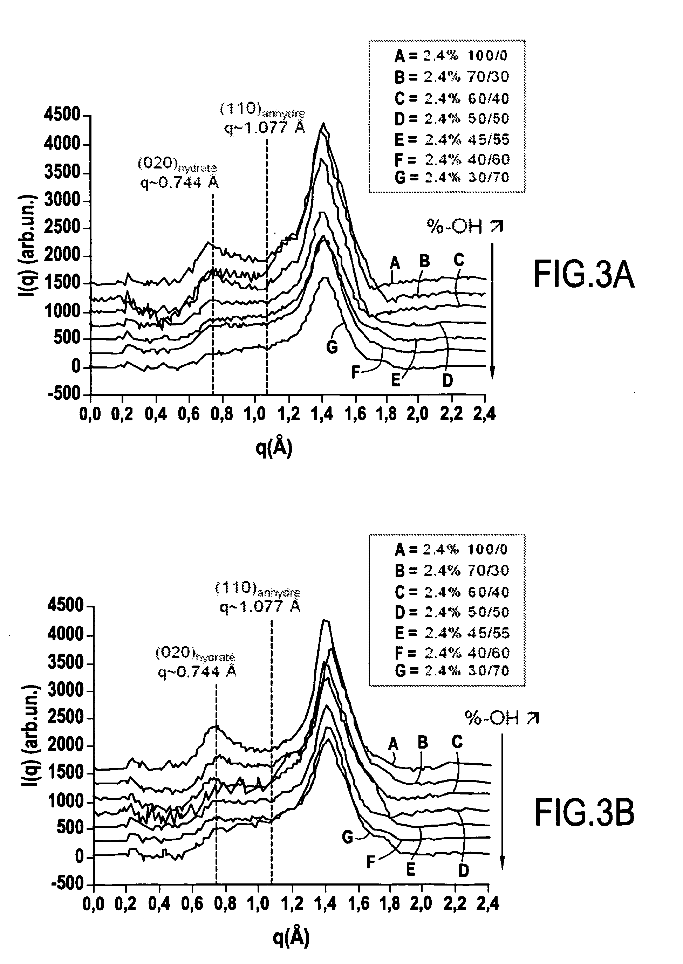

Les **figures 3A** et **3B** illustrent l'influence de la proportion eau/polyalcool du mélange dans lequel le chitosane est en solution. A la **figure 3A**, le bain alcalin **4a** comprend une concentration en ammoniaque de 1M. A la **figure 3B**, le bain alcalin comprend une concentration en soude de 1M. Ces graphiques mettent en évidence que lorsque le mélange eau/polyalcool comprend une proportion en poids d'eau supérieure ou égale à 60%, on obtient une formation majoritaire d'allomorphes hydratés. Lorsque la proportion en poids en polyalcool est supérieure ou égale à 50%, en particulier supérieure ou égale à 55%, on obtient des résultats significatifs sur la formation majoritaire d'allomorphes anhydres.

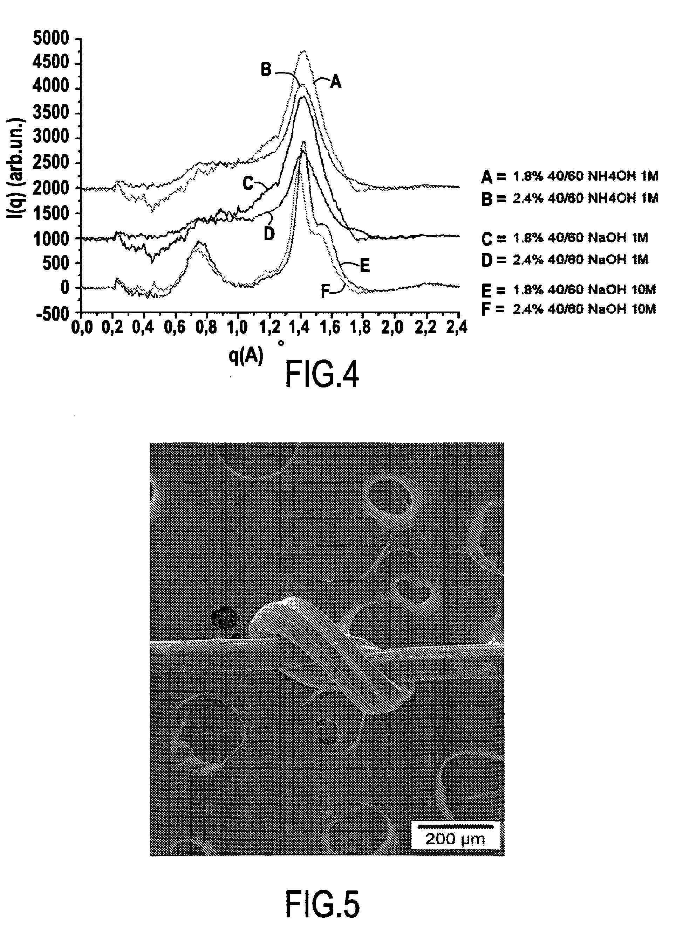

La **figure 4** illustre l'influence de la concentration en chitosane dans un mélange eau/polyalcool de 40/60% en poids dans une bain alcalin **4a** ayant, pour les deux premières courbes, une concentration en ammoniaque de 1M et, pour les quatre dernières courbes, une concentration en soude de 1M et de 10M pour des concentrations en poids de chitosane dans ledit mélange de 1,8% et de 2,4%.

Il ressort que la concentration en chitosane influence peu la formation d'allomorphes anhydres entre 1,8% et 2,4 %.

Il ressort de cette étude qu'après coagulation par neutralisation, les images WAXS (Wide Angle X-ray scattering) mettent en évidence des systèmes orientés cristallins, ce qui démontre l'importance de l'étape de neutralisation dans le développement de la cristallinité. De plus, les cristaux formés sont orientés dans une direction préférentielle, l'axe des chaînes macromoléculaires correspondant à l'axe du fil. Par ailleurs, l'analyse des anneaux de diffraction permet de constater qu'on génère dans le fil des cristaux anhydres ou un mélange de cristaux anhydres et hydratés, les cristaux anhydres étant majoritaires dans ce mélange.

Un essai comparatif a été réalisé avec des fils A et B de chitosane obtenus, pour les premiers A, selon la technique de filage au mouillé mentionnée ci-dessus (Journal of Applied Polymer Science, 1993, 50 (10), 1773-9) et, pour les seconds B, avec le procédé de la présente invention en partant de solutions de chitosane similaires, exception faite que, pour les premiers A, elle est strictement aqueuse alors que, pour les seconds B, elle est hydroalcoolique, contenant du 1,2-propane-diol. L'essai a été réalisé avec les fils A et B à l'état sec.

La **figure 5** illustre le résultat obtenu. En effet, il est impossible de faire un demi-noeud avec le fil A sans qu'il ne se rompe, tandis que le fil B supporte la formation d'un demi-noeud, lequel a pu être photographié à la **figure 5**.

Le test de résistance au noeud est effectué sur un banc de traction équipé d'un capteur Adamel-Lhomargy de 10N. Le fil B étudié est tenu entre deux pinces ou mors le mettant en tension sur un dispositif de mors spécifique aux éléments longilignes, en particulier les fils. Un demi-noeud est disposé sur le fil B en sorte qu'il se retrouve, une fois le fil B maintenu entre les deux mors, équidistants desdits mors. Le demi-noeud est effectué de façon lâche de sorte que l'opérateur n'exerce pas de tension sur celui-ci autre que la tension impartie lors de l'essai. Les extrémités du fil B sont enroulées trois fois au niveau desdits mors ayant une forme de demi-lune avant d'être serrées dans ces derniers et afin d'éviter tout glissement pendant le test de traction. La longueur du fil B sollicitée entre les deux mors est de 3 cm. Pour un rapport d'étirage de 1,30 (correspondant au rapport de la vitesse linéaire d'extrusion de la solution extrudée **9** sur la vitesse d'étirage, en sortie de l'étape de coagulation 4, du fil extrudé et coagulé 10), le titrage du fil B étant de l'ordre de 103 dtex +/- 1, la résistance au noeud est de 37 MPa +/-4. Lorsque le rapport d'étirage est de 1,54, le titrage du fil B étant de 85 dtex +/-1, la résistance au noeud est alors de 83 MPa +/- 9.

Ainsi, de façon surprenante, le fil B de chitosane de la présente invention présente des propriétés de résistance et de souplesse lui permettant d'être soumis, sans rupture, à la formation sur lui-même d'un noeud, y compris en exerçant une certaine tension sur les deux brins opposés audit noeud. Ceci n'a, à la connaissance des demandeurs, jamais été atteint avec des fils de chitosane obtenus par les techniques connues.

Ces propriétés dudit fil monobrin de chitosane selon l'invention ouvrent de nouveaux champs d'application du fait qu'il peut être travaillé dans des conditions de déformation importante et répétées, par exemple lors de la formation des mailles d'un tricot. Jusqu'à présent, les fils de chitosane obtenus par les techniques connues étaient mis en oeuvre uniquement sous forme de non-tissés. Avantageusement, le fil monobrin de chitosane de la présente invention peut être tricoté ou tissé.

L'élément longiforme obtenu grâce au procédé de l'invention, que ce soit un fil, mono- ou multi-filament, un film ou une plaque (ou toute autre forme...) peut être utilisé seul ou en combinaison avec d'autres éléments. Par exemple le fil peut être assemblé à un ou plusieurs autres fils pour former, par moulinage ou guipage par exemple, un fil composite. Par exemple le film peut être assemblé à un ou plusieurs autres films, par exemple par enduction, collage ou thermocollage, pour former un film multicouche. Il en est de même pour la plaque ou autre forme.

L'élément longiforme obtenu grâce au procédé de l'invention est utilisable dans de nombreuses applications, partout où la mise en oeuvre d'un polysaccharide est recherchée. Plus particulièrement, il est destiné à entrer dans la fabrication de matériaux destinés à une utilisation médicale, s'agissant notamment de matériaux textiles et tout particulièrement sous forme tricotée.

Particulièrement dans les applications médicales, les propriétés de bio-résorption de l'élément longiforme de polysaccharide obtenu par le procédé de l'invention peuvent être recherchées. Il est à noter à cet égard que la présence majoritaire de l'allomorphe anhydre permet d'en augmenter la durée de résorption in vivo. La formation contrôlée de cet allomorphe anhydre, notamment en faisant varier la proportion de polyalcool dans la solution extrudable, permet d'ajuster la durée de résorption souhaitable au cas par cas. Il en est de même lors de l'assemblage de l'élément longiforme de l'invention possédant cet allomorphe anhydre avec d'autres éléments, comme mentionné ci-dessus. De plus, s'agissant d'un élément de chitosane, il est aussi possible de faire varier le degré d'acétylation du chitosane utilisé pour former la solution hydroalcoolique pour ajuster la durée de résorption dudit élément.

Il est à noter que l'élimination du polyalcool contenu dans l'élément coagulé peut aussi être obtenue par évaporation complète dudit polyalcool, en particulier lorsque la coagulation est réalisée en mettant en oeuvre un gaz alcalin.

## Revendications

1. Procédé d'obtention d'un élément longiforme de polysaccharide comportant une opération d'extrusion d'une solution extrudable dudit polysaccharide à travers une filière d'extrusion et une opération de coagulation de la solution extrudée par neutralisation, **caractérisé en ce que** la solution extrudable est une solution hydro-alcoolique contenant un polyalcool, **en ce qu'**il comporte au moins une opération d'élimination du polyalcool contenu dans l'élément extrudé et coagulé pour obtenir l'élément longiforme de polysaccharide et **en ce que** la proportion d'eau et de poly-alcool dans la solution extrudable est déterminée en sorte d'obtenir dans l'élément longiforme un polysaccharide de structure cristalline dont une fraction supérieure ou égale à 40% est sous la forme de l'allomorphe anhydre.

2. Procédé selon la revendication 1 en ce que la proportion d'eau et de poly-alcool dans la solution extrudable est déterminée en sorte d'obtenir dans l'élément longiforme un polysaccharide dont la structure cristalline est majoritairement sous la forme de l'allomorphe anhydre.

3. Procédé selon la revendication 1 ou 2 **caractérisé en ce que** le polyalcool est choisi dans le groupe : 1,2- et 1,3-propane-diol, 1,2-, 1,3- et 1,4-butane-diol et 1,2,3-propane-triol.

4. Procédé selon l'une des revendications 1, 2 ou 3 **caractérisé en ce que** la solution hydroalcoolique contient de 0,8 à 3,5 % de polysaccharide et une proportion eau/poly-alcool dans laquelle la proportion en poids en eau est inférieure ou égale à 50% et la proportion en poids en polyalcool est supérieure ou égale à 50%, de préférence la proportion en polyalcool est supérieure à 55%.

5. Procédé selon l'une des revendications 1 à 4 **caractérisé en ce que** l'opération de coagulation consiste à faire passer l'élément extrudé dans une unité de neutralisation, acide ou basique, le poly-alcool étant éliminé au moins en partie au cours du passage de l'élément extrudé dans ladite unité.

6. Procédé selon la revendication 5 **caractérisé en ce que** la solution extrudable est une solution hydroalcoolique acide et l'opération de coagulation intervient par passage de la solution extrudée dans une unité de neutralisation contenant soit un bain alcalin soit un gaz alcalin, notamment de l'ammoniac gazeux.

7. Procédé selon l'une des revendications 1 à 6 pour la fabrication d'un filament continu ou d'un fil multifilamentaire de polysaccharide, l'extrusion étant réalisée à travers une filière simple ou multiple de filage, **caractérisé en ce qu'**il comporte au moins une opération d'étirage et finalement une opération de bobinage.

8. Procédé selon l'une des revendications 1 à 7 **caractérisé en ce que** le polysaccharide est soluble dans l'eau et filmogène et de préférence présente des liaisons glycosidiques β,(1->4).

9. Procédé selon la revendication 8 **caractérisé en ce que** le polysaccharide est choisi dans le groupe : chitosane, notamment acétylé, de préférence avec un degré d'acétylation inférieur à 40%, notamment inférieur à 30%, ou acylé, dérivés de cellulose, acide hyaluronique, hémicelluloses, alginates et pectines.

10. Procédé selon la revendication 9 pour l'obtention d'un élément longiforme de chitosane, **caractérisé en ce que** la solution extrudable est obtenue en mettant du chitosane en solution dans une solution aqueuse diluée d'acide, notamment d'acide acétique.

11. Procédé selon l'une des revendications 9 ou 10 **caractérisé en ce que** la masse molaire moyenne en masse Mw0 du chitosane est comprise entre 150 000 et 650 000 g/mol, de préférence entre 450 000 et 650 000 g/mol.

12. Procédé selon l'une des revendications 9 à 11 **caractérisé en ce que** la viscosité apparente de la solution hydroalcoolique est comprise entre 250 Pa.s et 2500 Pa.s.

13. Procédé selon la revendication 5 et l'une des revendications 9 à 12, **caractérisé en ce que** le bain alcalin de coagulation comprend entre 0,1 et 10 mole/L d'ammoniaque (NH₄OH).

14. Procédé selon la revendication 5 et l'une des revendications 9 à 12, **caractérisé en ce que** le bain alcalin de coagulation comprend 1 mole/L ou moins de soude.

15. Procédé selon l'une des revendications 1 à 6 et 8 à 14 pour la fabrication d'un film ou d'une plaque de polysaccharide, ou d'un tube de polysaccharide **caractérisé en ce que** la filière d'extrusion a une section rectangulaire circulaire ou annulaire.

16. Procédé selon l'une des revendications 1 à 15 **caractérisé en ce que** le polysaccharide mis en oeuvre pour préparer la solution extrudable a une masse molaire moyenne en masse Mw0 et **en ce que** le polysaccharide dans l'élément longiforme obtenu a une masse molaire moyenne en masse Mw1 qui est comprise entre Mw0 et 0,7 Mw0, de préférence comprise entre Mw0 et 0,8 Mw0.

17. Fil de chitosane, obtenu par le procédé selon l'une des revendications 9 à 15, **caractérisé en ce qu'**il comprend une fraction d'allomorphe anhydre du chitosane supérieure ou égale à 40%, de préférence supérieure ou égale à 50%, correspondant à la structure cristalline.

18. Fil de chitosane selon la revendication 17, **caractérisé en ce qu'**il présente des propriétés de résistance mécanique et de souplesse lui permettant d'être soumis, sans rupture, à la formation d'un demi-noeud sur lui-même.

19. Fil de chitosane selon l'une des revendications 17 et 18, **caractérisé en ce que** la masse molaire moyenne en masse Mw1 du chitosane est supérieure à 350.000 g/mole.

20. Matériau textile, notamment tricot, notamment à usage médical, comportant des fils de chitosane, selon l'une des revendications 17 à 19, seuls ou assemblés avec d'autres fils.

21. Procédé selon l'une des revendications 1 à 9 et 15 pour l'obtention d'un élément longiforme d'acide hyaluronique ou d'alginate, **caractérisé en ce que** la solution extrudable est obtenue en partant du hyaluronane ou de l'alginate en solution aqueuse à pH neutre et **en ce que** l'opération de coagulation se fait dans un bain de neutralisation acide.

## Patentansprüche

1. Verfahren für den Erhalt eines Polysaccharidelements langgestreckter Form, umfassend einen Vorgang zum Extrudieren einer extrudierbaren Lösung des Polysaccharids durch eine Extrudierdüse sowie einen Vorgang zum Koagulieren der extrudierten Lösung durch Neutralisieren, **dadurch gekennzeichnet, dass** die extrudierbare Lösung eine ein Polyalkohol enthaltende hydroalkoholische Lösung ist, dass es wenigstens einen Vorgang zum Entfernen des in dem extrudierten und koagulierten Element enthaltenen Polyalkohols umfasst, um das Polysaccharidelement langgestreckter Form zu erhalten, und dass das Verhältnis von Wasser und Polyalkohol in der extrudierbaren Lösung derart festgelegt ist, dass in dem Element langgestreckter Form ein Polysaccharid mit kristalliner Struktur erhalten wird, wovon ein Anteil von mehr als oder gleich 40 % in Form des wasserfreien Allomorphs vorliegt.

2. Verfahren nach Anspruch 1, dadurch, dass das Verhältnis von Wasser und Polyalkohol in der extrudierbaren Lösung derart festgelegt ist, dass in dem Element langgestreckter Form ein Polysaccharid erhalten wird, dessen kristalline Struktur hauptsächlich in Form des wasserfreien Allomorphs vorliegt

3. Verfahren nach Anspruch 1 oder 2, **dadurch gekennzeichnet, dass** der Polyalkohol ausgewählt ist aus der Gruppe: 1,2- und 1,3-Propandiol, 1,2-, 1,3- und 1,4-Butandiol und 1,2,3-Propantriol.

4. Verfahren nach einem der Ansprüche 1, 2 oder 3, **dadurch gekennzeichnet, dass** die hydroalkoholische Lösung 0,8 bis 3,5 % Polysaccharid und ein Wasser/Polyalkohol-Verhältnis enthält, bei dem der Gewichtsanteil an Wasser weniger als oder gleich 50 % beträgt und der Gewichtsanteil an Polyalkohol mehr als oder gleich 50 % beträgt, vorzugsweise der Anteil an Polyalkohol mehr als 55 % beträgt.

5. Verfahren nach einem der Ansprüche 1 bis 4, **dadurch gekennzeichnet, dass** der Koagulationsvorgang darin besteht, das extrudierte Element durch eine saure oder basische Neutralisierungseinheit gehen zu lassen, wobei der Polyalkohol im Laufe des Durchgangs des extrudierten Elements durch die Einheit wenigstens teilweise entfernt wird.

6. Verfahren nach Anspruch 5, **dadurch gekennzeichnet, dass** die extrudierbare Lösung eine saure hydroalkoholische Lösung ist und der Koagulationsvorgang dadurch erfolgt, dass die extrudierte Lösung eine Neutralisierungseinheit, die entweder ein alkalisches Bad oder ein alkalisches Gas, insbesondere gasförmiges Ammoniak enthält, durchläuft.

7. Verfahren nach einem der Ansprüche 1 bis 6, für die Herstellung eines Endlosfilaments oder eines Multifilamentfadens aus Polysaccharid, wobei das Extrudieren durch eine Einfach- oder Mehrfachspinndüse erfolgt, **dadurch gekennzeichnet, dass** es wenigstens einen Streckvorgang und abschließend einen Spulvorgang umfasst.

8. Verfahren nach einem der Ansprüche 1 bis 7, **dadurch gekennzeichnet, dass** das Polysaccharid wasserlöslich und filmbildend ist und vorzugsweise β,(1→4)-glykosidische Bindungen aufweist.

9. Verfahren nach Anspruch 8, **dadurch gekennzeichnet, dass** das Polysaccharid ausgewählt ist aus der Gruppe: Chitosan, insbesondere acetyliert, vorzugsweise mit einem Acetylierungsgrad von weniger als 40 %, insbesondere weniger als 30 %, oder acyliert, Cellulosederivate, Hyaluronsäure, Hemicellulosen, Alginate und Pektine.

10. Verfahren nach Anspruch 9, für den Erhalt eines Chitosanelements langgestreckter Form, **dadurch gekennzeichnet, dass** die extrudierbare Lösung dadurch erhalten wird, dass Chitosan in einer wässrigen, verdünnten Säure-, insbesondere Essigsäurelösung gelöst wird.

11. Verfahren nach einem der Ansprüche 9 oder 10, **dadurch gekennzeichnet, dass** die gewichtsmittlere molare Masse Mw0 des Chitosans zwischen 150.000 und 650.000 g/mol, vorzugsweise zwischen 450.000 und 650.000 g/mol beträgt.

12. Verfahren nach einem der Ansprüche 9 bis 11, **dadurch gekennzeichnet, dass** die Scheinviskosität der hydroalkoholischen Lösung zwischen 250 Pa.s und 2500 Pa.s beträgt.

13. Verfahren nach Anspruch 5 und einem der Ansprüche 9 bis 12, **dadurch gekennzeichnet, dass** das alkalische Koagulationsbad zwischen 0,1 und 10 mol/L wässrige Lösung von Ammoniak (NH₄OH) umfasst.

14. Verfahren nach Anspruch 5 und einem der Ansprüche 9 bis 12, **dadurch gekennzeichnet, dass** das alkalische Koagulationsbad 1 mol/L oder weniger Soda umfasst.

15. Verfahren nach einem der Ansprüche 1 bis 6 und 8 bis 14, für die Herstellung eines Films oder einer Platte aus Polysaccharid oder einer Polysaccharidröhre, **dadurch gekennzeichnet, dass** die Extrudierdüse einen rechteckigen, kreisförmigen oder ringförmigen Querschnitt aufweist.

16. Verfahren nach einem der Ansprüche 1 bis 15, **dadurch gekennzeichnet, dass** das Polysaccharid, das für die Zubereitung der extrudierbaren Lösung verwendet wird, eine gewichtsmittlere molare Masse Mw0 aufweist und dass das Polysaccharid in dem erhaltenen Element langgestreckter Form eine gewichtsmittlere molare Masse Mw1 hat, die zwischen Mw0 und 0,7 Mw0, vorzugsweise zwischen Mw0 und 0,8 Mw0 liegt.

17. Chitosanfaden, der durch das Verfahren nach einem der Ansprüche 9 bis 15 erhalten wird, **dadurch gekennzeichnet, dass** er einen Anteil an wasserfreiem Allomorph des Chitosans von mehr als oder gleich 40 %, vorzugsweise mehr als oder gleich 50 % umfasst, der der kristallinen Struktur entspricht.

18. Chitosanfaden nach Anspruch 17, **dadurch gekennzeichnet, dass** er mechanische Festigkeits- und Flexibilitätseigenschaften aufweist, die ihm ermöglichen, der Bildung eines halben Knotens an ihm selbst unterzogen zu werden, ohne zu brechen.

19. Chitosanfaden nach einem der Ansprüche 17 und 18, **dadurch gekennzeichnet, dass** die gewichtsmittlere molare Masse Mw1 des Chitosans mehr als 350.000 g/mol beträgt.

20. Textiles Material, insbesondere Gestrick, insbesondere für medizinische Zwecke, umfassend Chitosanfäden, nach einem der Ansprüche 17 bis 19, allein oder mit weiteren Fäden verbunden.

21. Verfahren nach einem der Ansprüche 1 bis 9 und 15, für den Erhalt eines Hyaluronsäure- oder Alginatelements langgestreckter Form, **dadurch gekennzeichnet, dass** die extrudierbare Lösung ausgehend von Hyaluronan oder von Alginat in wässriger Lösung mit neutralem pH-Wert erhalten wird und dass der Koagulationsvorgang in einem sauren Neutralisierungsbad erfolgt.

## Claims

1. A method for producing an elongate polysaccharide element comprising an operation of extruding an extrudable solution of said polysaccharide through an extrusion spinneret and an operation of coagulating the extruded solution by neutralization, **characterized in that** the extrudable solution is an aqueous-alcoholic solution containing a polyalcohol, **in that** it comprises at least one operation of eliminating the polyalcohol contained in the extruded and coagulated element in order to obtain the elongate polysaccharide element and **in that** the proportion of water and of polyalcohol in the extrudable solution is determined so as to obtain in the elongate element a polysaccharide having a crystalline structure with a portion superior or equal to 40% which is in the form of the anhydrous allomorph.

2. The method as claimed in claim 1, in that the proportion of water and of polyalcohol in the extrudable solution is determined so as to obtain in the elongate element a polysaccharide having a crystalline structure which is predominantly in the form of the anhydrous allomorph.

3. The method as claimed in claim 1 or 2, **characterized in that** the polyalcohol is chosen from the group: 1,2- and 1,3-propanediol, 1,2-, 1,3-and 1,4-butanediol and 1,2,3-propanetriol.

4. The method as claimed in claim 1, 2 or 3, **characterized in that** the aqueous-alcoholic solution contains from 0.8% to 3.5% of polysaccharide and a water/polyalcohol ratio in which the proportion by weight of water is less than or equal to 50% and the proportion by weight of polyalcohol is greater than or equal to 50%, preferably the proportion of polyalcohol is greater than 55%.

5. The method as claimed in one of claims 1 to 4, **characterized in that** the coagulation operation consists in passing the extruded element into an acidic or basic neutralization unit, the polyalcohol being at least partly eliminated during the passage of the extruded element through said unit.

6. The method as claimed in claim 5, **characterized in that** the extrudable solution is an acidic aqueous-alcoholic solution and the coagulation operation takes place by passing the extruded solution into a neutralization unit containing either an alkaline bath or an alkaline gas, in particular gaseous ammonia.

7. The method as claimed in one of claims 1 to 6, for the production of a continuous filament or of a multifilament yarn of polysaccharide, the extrusion being carried out through a single or multiple spinning spinneret, **characterized in that** it comprises at least one drawing operation and finally a winding operation.

8. The method as claimed in one of claims 1 to 7, **characterized in that** the polysaccharide is water-soluble and film-forming and preferably has β-(1→4) glycosidic bonds.

9. The method as claimed in claim 8, **characterized in that** the polysaccharide is chosen from the group: chitosan, in particular acetylated chitosan, preferably with a degree of acetylation of less than 40%, in particular less than 30%, or acylated chitosan, cellulose derivatives, hyaluronic acid, hemicelluloses, alginates and pectins.

10. The method as claimed in claim 9, for producing an elongate chitosan element, **characterized in that** the extrudable solution is obtained by dissolving chitosan in a dilute aqueous solution of acid, in particular of acetic acid.

11. The method as claimed in either of claims 9 and 10, **characterized in that** the weight-average molar mass Mw0 of the chitosan is between 150 000 and 650 000 g/mol, preferably between 450 000 and 650 000 g/mol.

12. The method as claimed in one of claims 9 to 11, **characterized in that** the apparent viscosity of the aqueous-alcoholic solution is between 250 Pa.s and 2500 Pa.s.

13. The method as claimed in claim 5 and one of claims 9 to 12, **characterized in that** the alkaline coagulation bath comprises between 0.1 and 10 mol/l of ammonium hydroxide (NH₄OH).

14. The method as claimed in claim 5 and one of claims 9 to 12, **characterized in that** the alkaline coagulation bath comprises 1 mol/I or less of sodium hydroxide.

15. The method as claimed in one of claims 1 to 6 and 8 to 14, for producing a polysaccharide film or sheet, or a polysaccharide tube, **characterized in that** the extrusion spinneret has a rectangular, circular or annular cross section.

16. The method as claimed in one of claims 1 to 15, **characterized in that** the polysaccharide used for preparing the extrudable solution has a weight-average molar mass Mw0 and **in that** the polysaccharide in the elongate element obtained has a weight-average molar mass Mw1 which is between Mw0 and 0.7 Mw0, preferably between Mw0 and 0.8 Mw0.

17. A chitosan yarn, obtained by the method as claimed in one of claims 9 to 15, **characterized in that** it comprises a fraction of the anhydrous allomorph of chitosan of greater than or equal to 40%, preferably greater than or equal to 50%, corresponding to the crystalline structure.

18. The chitosan yarn as claimed in claim 17, **characterized in that** it has mechanical strength and flexibility properties that enable it to be subjected, without breaking, to the formation of an overhand knot upon itself.

19. The chitosan yarn as claimed in either of claims 17 and 18, **characterized in that** the weight-average molar mass Mw1 of the chitosan is greater than 350 000 g/mol.

20. A textile material, in particular a knit fabric, in particular for medical use, comprising chitosan yarns, as claimed in one of claims 17 to 19, alone or assembled with other yarns.

21. The method as claimed in one of claims 1 to 9 and 15 for producing an elongate hyaluronic acid or alginate element, **characterized in that** the extrudable solution is obtained starting from hyaluronan or from alginate in aqueous solution at neutral pH and **in that** the coagulating operation is carried out in an acidic neutralizing bath.
